# EUROPEAN PATENT APPLICATION

(11) **EP 4 711 099 A1**
(43) Date of publication of application: **18.03.2026**
(21) Application number: 24897901.5
(22) Date of filing: 25.10.2024
(51) Int. Cl.: B25J 13/08, B25J 5/00, B25J 9/16, B25J 19/02, G05D 1/243, G05D 1/246, G01S 17/87, G05D 111/10

(54) **ROBOT DEVICE FOR IDENTIFYING UNEVEN AREA AND CONTROL METHOD THEREFOR**

(30) Priority: 28.11.2023 KR 20230168347
(71) Applicant: Samsung Electronics Co., Ltd., Suwon-si, Gyeonggi-do 16677 (KR)
(72) Inventor: LEE, Taeyoon, Suwon-si, Gyeonggi-do 16677 (KR); MOON, Boseok, Suwon-si, Gyeonggi-do 16677 (KR)
(74) Representative: Gulde & Partner
(86) International application number: PCT/KR2024/016478
(87) International publication number: WO 2025/116304

(57) **Abstract**

A robot device is disclosed. The robot device includes memory, a first LiDAR sensor and a second LiDAR sensor, and at least one processor configured to obtain bottom information about a bottom of a space where the robot device is located based on first sensing data received from the first LiDAR sensor and second sensing data received from the second LiDAR sensor, identify a plurality of sub spaces included in the space based on the bottom information, obtain driving level information including driving levels associated with each of the plurality of sub spaces, and control a movement of the robot device based on a driving level of a sub space corresponding to a location of the robot device, the sub space being among the plurality of sub spaces, and wherein the driving level is obtained from the driving level information stored in memory.

## Description

### THEREFORTECHNICAL FIELD

The disclosure relates to a robot device and a control method thereof, and more particularly, to a robot device that identifies a flat area and a non-flat area in a space, and a control method thereof.

### BACKGROUND ART

Recently, distribution of robot devices is accelerating in various fields, and robot devices are not only replacing people's roles, but also there is a recent trend that unmanned factories (or, smart factories), etc. that operate only with robot devices without people are rapidly increasing.

As a robot device travels autonomously in a factory, it is necessary to detect the ambient environment of the robot device with high accuracy such that the robot device can move more easily.

For example, it is necessary to detect whether a bottom on which a robot device drives is flat or not flat (e.g., whether the bottom is bumpy), and while a robot device is driving on a bottom that is not flat, it is necessary that the robot device drives safely for preventing occurrence of a fall accident of an object loaded on the robot device.

In the past, a robot device merely detected an obstacle and drove to avoid the obstacle, and there was a problem that it was difficult to adjust the driving speed of the robot device, or make the robot device drive to avoid an obstacle in consideration of the state of the bottom (e.g., whether there were bumpy curves, etc.).

Accordingly, there have been various demands for a method for a robot device located in a factory, etc. to detect the state of the bottom with higher accuracy, and adjust the driving speed or a driving route in consideration of the state of the bottom.

### DISCLOSURE

### TECHNICAL SOLUTION

A robot device according to an embodiment of the disclosure includes memory, a first LiDAR sensor configured to detect obstacles in a first direction, a second LiDAR sensor configured to detect obstacles in a second direction that is opposite to the first direction, and at least one processor. The at least one processor is configured to: obtain bottom information about a bottom of a space where the robot device is located based on first sensing data received from the first LiDAR sensor and second sensing data received from the second LiDAR sensor, identify a plurality of sub spaces included in the space based on the bottom information, obtain driving level information, wherein the driving level information includes driving levels associated with each of the plurality of sub spaces and store the driving level information in the memory, and control a movement of the robot device based on a driving level of a sub space corresponding to a location of the robot device, the sub space being among the plurality of sub spaces, and wherein the driving level is obtained from the driving level information stored in the memory.

A control method of a robot device according to an embodiment of the disclosure includes receiving first sensing data from a first LiDAR sensor in a first direction based on the robot device; receiving second sensing data from a second LiDAR sensor in a second direction that is opposite to the first direction; obtaining bottom information about a bottom of a space where the robot device is located based on the first sensing data and the second sensing data; identifying a plurality of sub spaces included in the space based on the bottom information; obtaining driving level information, wherein the driving level information includes driving levels associated with each of the plurality of sub spaces, and controlling the driving of the robot device based on a driving level of a sub space corresponding to a location of the robot device, the sub space being among the plurality of sub spaces.

According to an embodiment of the disclosure, in a non-transitory computer-readable recording medium including a program executing a control method of a robot device, the control method of a robot device includes receiving first sensing data from a first LiDAR sensor in a first direction based on the robot device; receiving second sensing data from a second LiDAR sensor in a second direction that is opposite to the first direction; obtaining bottom information about a bottom of a space where the robot device is located based on the first sensing data and the second sensing data; identifying a plurality of sub spaces included in the space based on the bottom information; obtaining driving level information, wherein the driving level information includes driving levels associated with each of the plurality of sub spaces, and controlling the driving of the robot device based on a driving level of a sub space corresponding to a location of the robot device, the sub space being among the plurality of sub spaces.

According to an embodiment of the disclosure, in an apparatus for controlling a robot device, the apparatus includes at least one memory configured to store program code; and at least one processor configured to read the program code and operate as instructed by the program code. The program code includes first receiving code configured to cause the at least one processor to receive first sensing data from a first LiDAR sensor in a first direction based on the robot device; second receiving code configured to cause the at least one processor to receive second sensing data from a second LiDAR sensor in a second direction that is opposite to the first direction; first obtaining code configured to cause the at least one processor to obtain bottom information about a bottom of a space where the robot device is located based on the first sensing data and the second sensing data; first identifying code configured to cause the at least one processor to identify a plurality of sub spaces included in the space based on the bottom information; second obtaining code configured to cause the at least one processor to obtain driving level information, wherein the driving level information includes driving levels associated with each of the plurality of sub spaces, and first controlling code configured to cause the at least one processor to control the driving of the robot device based on a driving level of a sub space corresponding to a location of the robot device, the sub space being among the plurality of sub spaces.

### DESCRIPTION OF DRAWINGS

FIG. 1 is a diagram for illustrating driving of a robot device, according to an embodiment of the disclosure;
FIG. 2 is a block diagram for a robot device, according to an embodiment of the disclosure;
FIG. 3 is a diagram for illustrating views associated with LiDAR sensors, according to an embodiment of the disclosure;
FIG. 4 is a diagram for illustrating data from one or more LiDAR sensors, according to an embodiment of the disclosure;
FIG. 5 is a diagram illustrating a depth image, according to an embodiment of the disclosure;
FIG. 6A is a diagram illustrating change of a pitch of a robot device, according to an embodiment of the disclosure;
FIG. 6B is a diagram illustrating change of a roll of a robot device, according to an embodiment of the disclosure;
FIG. 7 is a diagram illustrating a driving and/or movement speed of a robot device, according to an embodiment of the disclosure;
FIG. 8 is a diagram illustrating an object loaded on a robot device, according to an embodiment of the disclosure;
FIG. 9 is a diagram illustrating evasive driving of a robot device according to an embodiment of the disclosure;
FIG. 10 is a flow chart illustrating a method of controlling of a robot device, according to an embodiment of the disclosure; and
FIG. 11 is a flow chart illustrating a method of controlling a robot device, according to an embodiment of the disclosure.

### MODE FOR INVENTION

Hereinafter, the disclosure will be described in detail with reference to the accompanying drawings.

As terms used in the embodiments of the disclosure, general terms that are currently used widely were selected as far as possible, in consideration of the functions described in the disclosure. However, the terms may vary depending on the intention of those skilled in the art who work in the pertinent field, previous court decisions, or emergence of new technologies, etc. Also, in particular cases, there may be terms that were designated by the applicant on his own, and in such cases, the meaning of the terms will be described in detail in the relevant descriptions in the disclosure. Accordingly, the terms used in the disclosure should be defined based on the meaning of the terms and the overall content of the disclosure, but not just based on the names of the terms.

Also, in this specification, expressions such as "have," "may have," "include," and "may include" denote the existence of such characteristics (e.g.: elements such as numbers, functions, operations, and components), and do not exclude the existence of additional characteristics.

In addition, the expression "at least one of A and/or B" should be interpreted to mean any one of "A" or" B" or "A and B."

Further, the expressions "first," "second," and the like used in this specification may be used to describe various elements regardless of any order and/or degree of importance. Also, such expressions are used only to distinguish one element from another element, and are not intended to limit the elements.

Meanwhile, the description in the disclosure that one element (e.g.: a first element) is "(operatively or communicatively) coupled with/to" or "connected to" another element (e.g.: a second element) should be interpreted to include both the case where the one element is directly coupled to the another element, and the case where the one element is coupled to the another element through still another element (e.g.: a third element).

Also, singular expressions include plural expressions, unless defined obviously differently in the context. Further, in the disclosure, terms such as "include" or "consist of" should be construed as designating that there are such characteristics, numbers, steps, operations, elements, components, or a combination thereof described in the specification, but not as excluding in advance the existence or possibility of adding one or more of other characteristics, numbers, steps, operations, elements, components, or a combination thereof.

In addition, in the disclosure, "a module" or "a part" performs at least one function or operation, and may be implemented as hardware or software, or as a combination of hardware and software. Also, a plurality of "modules" or "parts" may be integrated into at least one module and implemented as at least one processor (not shown), except "a module" or "a part" that needs to be implemented as specific hardware.

Further, in this specification, the term "user" may refer to a person who uses an electronic device or a device using an electronic device (e.g.: an artificial intelligence electronic device).

Hereinafter, an embodiment of the disclosure will be described in more detail with reference to the accompanying drawings.

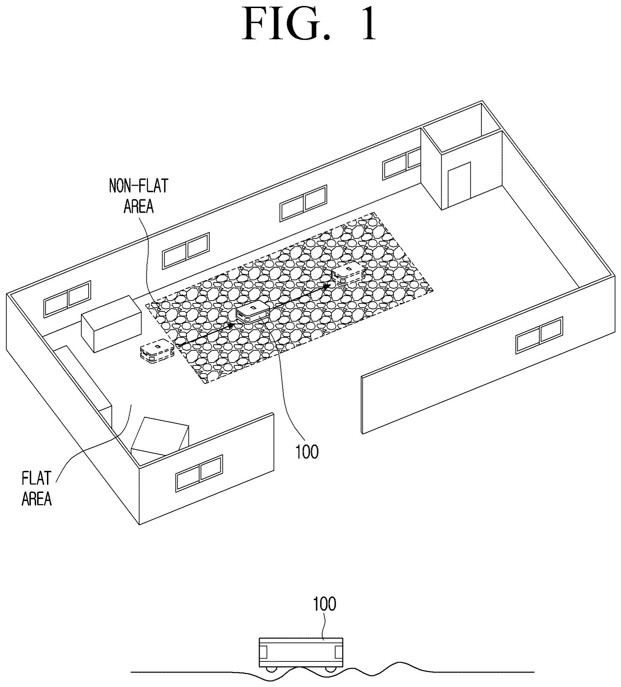

FIG. 1 is a diagram for illustrating driving of a robot device according to an embodiment of the disclosure.

According to what is illustrated in FIG. 1, the robot device 100 may mean devices in various forms having capacity to perform a function by themselves. As an example, the robot device 100 may include a smart device that senses the ambient environment of the robot device 100 in real time based on sensing data of a sensor (e.g., a Light Detection And Ranging (LiDAR) sensor), and a camera (e.g., a depth camera, an RGB camera, etc.), and collects information and autonomously operates other than performing simple repetitive functions.

The robot device 100 according to an embodiment of the disclosure may include a driver including an actuator or a motor. The driver according to an embodiment may include a wheel, a brake, etc., and the robot device 100 may move in a space by itself by using the wheel, the brake, etc. included in the driver.

The robot device 100, according to an embodiment, may include a robot joint (an articulation or a joint). In the present disclosure, a robot joint may mean a component of the robot device 100 for replacing the function of a human arm or hand.

The robot device 100 according to an embodiment of the disclosure may include a sensor, and obtain map information corresponding to a space wherein the robot device 100 is located (e.g., a predetermined space inside a factory, a predetermined space in a home) based on sensing data of the sensor.

For example, the robot device 100 may include a LiDAR sensor, and generate a 2D or 3D map corresponding to a space by using sensing data of the LiDAR sensor and various mapping algorithms.

A Light Detection And Ranging (LiDAR) sensor is a sensor that measures a distance of a specific object. Specifically, a LiDAR sensor may perform sensing by a method of shooting a light by using a light source, and when the light is shot (or, emitted) by a target object, detecting the reflected light by using a sensor around the light source. The robot device 100 may measure the time that was taken until a light returns, and calculate a distance to a target object based on the measured time and the speed of the light. The robot device 100 may generate a 3D (or, 2D) map for a specific space by periodically repeating measurement in the specific space by using a LiDAR sensor. Here, the map may include an image in a 2D or 3D form or information indicating an entire space, and the locations, the sizes, the forms, etc. of a plurality of sub spaces included in the space. The map may further include an image in a 2D or 3D form or information indicating the entire space, and the locations, the sizes, the forms, etc. of obstacles (e.g., factory equipment (e.g., a production machine), furniture, home appliances, etc.) included in each of the plurality of sub spaces. The map information may be various kinds of information or data for constituting such a map.

The robot device 100 according to an embodiment may identify the location of the robot device 100 in a map based on sensing data.

As an example, the robot device 100 may identify a moving route based on map information, and identify the location of the robot device 100 in a map while the robot device 100 is moving in a space according to the moving route.

As an example, the robot device 100 may obtain map information corresponding to the space wherein the robot device 100 is located by performing a Simultaneous Localization and Mapping (SLAM) operation, and identify the current location of the robot device 100 in the map.

Meanwhile, the robot device 100 may be divided into an industrial use, a medical use, a household use, a military use, and an exploration use according to functions that it can perform. According to an embodiment, a robot device for an industrial use may be subdivided into a robot device used in a manufacturing process of a product in a factory, a robot device performing serving of guests, receipt of orders, and serving, etc. in stores or restaurants, etc. For example, the robot device 100 may be implemented as a serving robot device that can carry service goods to a location desired by a user, or a specific location in various places such as a restaurant, a hotel, a mart, a hospital, a clothing store, etc.

However, the disclosure is not limited thereto, and the robot device 100 may be classified in various ways according to the application field, the function, and the purpose of use. For example, the robot device 100 may be implemented in various forms such as a movable projector equipped with a projection function, a robot cleaner including a cleaning function, a service robot for delivering or conveying various kinds of goods, etc. The robot device 100 may further include various components such as a projection part (not shown), a dry cleaning module, a wet cleaning module, a robot arm, etc. depending on implementation examples, but detailed illustration and explanation in this regard will be omitted.

According to an embodiment of the disclosure, the robot device 100 may obtain information on a bottom of a space based on sensing data. Also, according to an embodiment, the robot device 100 may divide the space into a plurality of sub spaces based on the bottom information.

For example, the bottom information may include information related to a flat area and information related to a non-flat area in the space.

As an example, a flat area may be an area wherein the uniformity of the bottom surface is within a specific allowable range. A flat area may also be referred to as a low risk area, an area wherein moving of the robot device 100 is easy, less risky, etc., but it will be generally referred to as a flat area hereinafter.

As an example, a non-flat area may be an area wherein the uniformity of the bottom surface exceeds an allowable range, i.e., an area wherein the bottom is uneven beyond a tolerable range. A non-flat area may also be referred to as a high risk area, an area wherein moving of the robot device 100 is not easy, risky area, or a bumpy area, etc., but it will be generally referred to as a non-flat area hereinafter.

As an example, information related to a flat area may include the location, the size (or, the area), the form, etc. of the flat area inside a space, and information related to a non-flat area may include the location, the size, the form, etc. of the non-flat area inside a space.

According to an embodiment, the robot device 100 may obtain map information wherein a space is divided into a plurality of sub spaces based on bottom information.

According to an embodiment, the robot device 100 may control the driving of the robot device 100 by identifying whether a sub space to which the robot device 100 is going to move among the plurality of sub spaces is a flat area or a non-flat area based on the map information.

According to an embodiment, the robot device 100 may divide a space into a plurality of sub spaces by identifying a flat area and a non-flat area in the space, or divide a space into a plurality of sub spaces by identifying an independent area surrounded by walls. However, this is merely an example, and the robot device 100 may divide a space into a plurality of sub spaces by identifying furniture, steps, a threshold, etc. in the space.

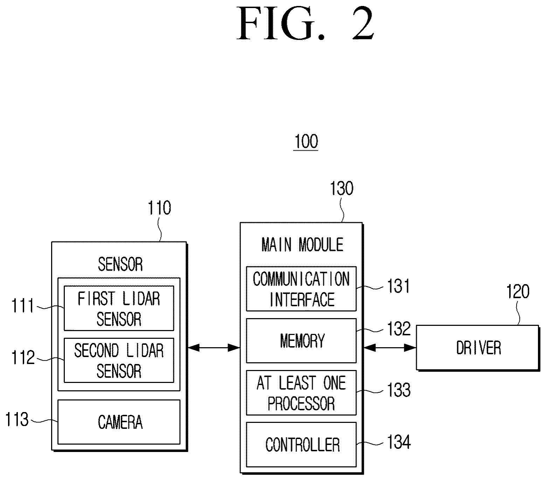

FIG. 2 is a block diagram for illustrating a robot device according to an embodiment of the disclosure.

Referring to FIG. 2, the robot device 100 includes a sensor 110, a driver 120, and a main module 130.

According to an embodiment, the sensor 110 may include a plurality of LiDAR sensors, such as a first LiDAR sensor 111, a second LiDAR sensor 112. The sensor 110 may also include a camera 113. The main module 130 may include a communication interface 131, a memory 132 (comprising one or more memory chips and types), at least one processor 133, and a controller 134.

The sensor 110 is a component for sensing various kinds of information. According to an embodiment, the at least one processor 133 may obtain various kinds of information based on sensing values of the sensor 110. For example, information obtained by the sensor 110 may include an image and depth information. The image may include RGB values of each of a plurality of pixels included in the image. The depth information may include a depth map including depth values of each of the plurality of pixels.

According to an embodiment, the sensor 110 includes a first LiDAR sensor 111 and a second LiDAR sensor 112.

Each of the first LiDAR sensor 111 and the second LiDAR sensor 112 may shoot a light to a target object by using a light source, and detect the light reflected from the target object. The at least one processor 133 may identify the distance to the target object based on the time that was taken until a light is reflected from the target object and detected after shooting a light from each of the first LiDAR sensor 111 and the second LiDAR sensor 112.

According to an embodiment of the disclosure, the first LiDAR sensor 111 may be provided to detect a first direction (or, shoot a light in a first direction) based on the robot device 100. In the present embodiment, the first direction may be the driving direction of the robot device 100 when the robot device 100 drives forward, or a direction toward the front side of the robot device 100.

For example, the first LiDAR sensor 111 may detect a distance from an obstacle located on the front side of the robot device 100 when the robot device 100 drives forward. However, this is merely an example, and the first direction may correspond to the side (e.g., the right side, or the left side, etc.) of the robot device 100.

According to an embodiment of the disclosure, the second LiDAR sensor 112 may be provided to detect a second direction opposite to the first direction (or, shoot a light in a second direction) based on the robot device 100. In an embodiment, the second direction may be an opposite direction to a driving direction of the robot device 100 when the robot device 100 drives forward, or a direction corresponding to the rear side of the robot device 100.

For example, the second LiDAR sensor 112 may detect a distance from an obstacle located on the rear side of the robot device 100 when the robot device 100 drives forward. However, this is merely an example, and the second direction may correspond to the side (e.g., the right side, or the left side, etc.) of the robot device 100. Also, the first direction and the second direction may be implemented as directions that are completely opposite to each other, but are not necessarily limited thereto, and they may be implemented as two different directions that are related by a specific angle or more.

According to an embodiment, the first LiDAR sensor 111 may obtain first sensing data that sensed a distance from an obstacle located in the first direction, and the second LiDAR sensor 112 may obtain second sensing data that sensed a distance from an obstacle located in the second direction.

According to an embodiment, the sensor 110 may include a camera 113. The camera 113 may include a stereo camera, an RGB-D camera, a Time of Flight (ToF) camera, a depth camera, etc. However, the disclosure is not limited to this example, and the sensor 110 may include various sensors that can obtain images and depth information.

The driver 120 may control moving of the robot 200. For example, the driver 120 may control the movement of the robot device 100, stop the robot device 100 that is moving, and/or control the moving speed and/or the moving direction of the robot device 100.

In embodiments, the robot device 100 may move using any suitable driving apparatus, for example, a wheel type driving apparatus, a walking type driving apparatus, etc.

The wheel type means a method wherein the robot device 100 moves through a rotation of a wheel. If the robot device 100 is a wheel type robot, the robot device 100 may include one or more wheels. The driver 120 may include a device that generates power for rotating the wheel. For example, the driver 120 may be implemented as a gasoline engine, a diesel engine, a liquefied petroleum gas (LPG) engine, or an electric motor, etc. according to the used fuel (or an energy source).

The walking type means a method wherein the robot device 100 moves through moving of legs. If the robot device 100 is a walking type (e.g.: a two-legged walking robot, a three-legged walking robot, a four-legged walking robot, etc.), the robot device 100 may include two or more legs supporting the robot device 100. The legs may include a plurality of links, and a joint connected to the links. The driver 120 may include a device that generates power that makes the legs lifted or lowered by rotating the links with the joint as the center. For example, the driver 120 may be implemented as a motor and/or an actuator, etc.

Also, the driver 120 may control moving of a part of the robot device 100. The driver 120 may be coupled between a first part (e.g.: a body) and a second part (e.g.: a head, an arm, etc.) of the robot device 100. The driver 120 may rotate the second part. For example, the driver 120 may be implemented as a motor and/or an actuator, etc.

The main module 130 may be implemented as hardware, and include a communication interface 131, memory 132, at least one processor 133, and a controller 134.

The communication interface 131 may perform data communication with electronic devices by control by the at least one processor 133. For example, the communication interface 131 may include communication circuitry that can perform data communication between the robot device 100 and an electronic device by using at least one of data communication methods including a wired LAN, a wireless LAN, Wi-Fi, Bluetooth, Zigbee, Wi-Fi Direct (WFD), infrared Data Association (IrDA), Bluetooth Low Energy (BLE), Near Field Communication (NFC), Wireless Broadband Internet (Wibro), World Interoperability for Microwave Access (WiMAX), Shared Wireless Access Protocol (SWAP), Wireless Gigabit Alliances (WiGig), and RF communication.

In the memory 132, instructions, data structures, and program codes that can be read by the at least one processor 133 may be stored. Operations performed by the at least one processor 133 may be implemented by executing the instructions or codes of the programs stored in the memory 132.

The memory 132 may include memory of a flash memory type, memory of a hard disk type, memory of a multimedia card micro type, and memory of a card type (e.g., SD or XD memory, etc.), and may include non-volatile memory including at least one of Read-Only Memory (ROM), Electrically Erasable Programmable Read-Only Memory (EEPROM), Programmable Read-Only Memory (PROM), magnetic memory, a magnetic disk, or an optical disk, and volatile memory such as Random Access Memory (RAM) or Static Random Access Memory (SRAM).

According to an embodiment, the at least one processor 133 controls the overall operations of the robot device 100. Specifically, the at least one processor 133 may be connected with each component of the robot device 100, and control the overall operations of the robot device 100.

The at least one processor 133 may perform the operations of the robot device 100 according to various embodiments by executing the at least one instruction stored in the memory 132.

The at least one processor 133 may include one or more of a central processing unit (CPU), a graphics processing unit (GPU), an accelerated processing unit (APU), a many integrated core (MIC), a digital signal processor (DSP), a neural processing unit (NPU), a hardware accelerator, or a machine learning accelerator. The at least one processor 133 may control one or a random combination of other components of the robot device, and perform operations regarding communication or data processing. The at least one processor 133 may execute one or more programs or instructions stored in the memory 132. For example, the at least one processor 133 may perform the method according to an embodiment of the disclosure by executing the one or more instructions stored in the memory 132.

When the method according to an embodiment of the disclosure includes a plurality of operations, the plurality of operations may be performed by one processor, or performed by a plurality of processors. For example, when a first operation, a second operation, and a third operation are performed by the method according to an embodiment, all of the first operation, the second operation, and the third operation may be performed by a first processor, or the first operation and the second operation may be performed by the first processor (e.g., a generic-purpose processor), and the third operation may be performed by a second processor (e.g., an artificial intelligence-dedicated processor).

The at least one processor 133 may be implemented as a single core processor including one core, or may be implemented as one or more multicore processors including a plurality of cores (e.g., multicores of the same kind or multicores of different kinds). When the at least one processor 133 is implemented as multicore processors, each of the plurality of cores included in the multicore processors may include internal memory of the processor such as cache memory, on-chip memory, etc., and common cache shared by the plurality of cores may be included in the multicore processors. Also, each of the plurality of cores (or some of the plurality of cores) included in the multicore processors may independently read a program instruction for implementing the method according an embodiment of the disclosure and perform the instruction, or the plurality of entire cores (or some of the cores) may be linked with one another, and read a program instruction for implementing the method according to an embodiment of the disclosure and perform the instruction.

When the method according to an embodiment of the disclosure includes a plurality of operations, the plurality of operations may be performed by one core among the plurality of cores included in the multicore processors, or they may be performed by the plurality of cores. For example, when the first operation, the second operation, and the third operation are performed by the method according to an embodiment, all of the first operation, the second operation, and the third operation may be performed by a first core included in the multicore processors, or the first operation and the second operation may be performed by the first core included in the multicore processors, and the third operation may be performed by a second core included in the multicore processors.

In the embodiments of the disclosure, the processor may mean a system on chip (SoC) wherein at least one processor and other electronic components are integrated, a single core processor, a multicore processor, or a core included in the single core processor or the multicore processor. Also, here, the core may be implemented as a CPU, a GPU, an APU, a MIC, a DSP, an NPU, a hardware accelerator, or a machine learning accelerator, etc., but the embodiments of the disclosure are not limited thereto.

According to an embodiment of the disclosure, the at least one processor 133 may obtain information of the bottom of the space wherein the robot device 100 is located based on the first sensing data received from the first LiDAR sensor 111 and the second sensing data received from the second LiDAR sensor 112.

The at least one processor 133 according to an embodiment may identify a plurality of sub spaces included in the space based on the bottom information.

The controller 134 may control the components of the robot device 100. The controller 134 may control the components of the robot device 100 (e.g.: the sensor 110 and the driver 120, etc.) based on a signal provided from the at least one processor 133. For example, the controller 134 may generate a control signal by using a signal provided from the at least one processor 133, and provide the control signal to the components of the robot device 100. Accordingly, the components of the robot device 100 may perform an operation corresponding to an operation result of the at least one processor 133. The controller 134 may be implemented as at least one IC (e.g.: a controller IC).

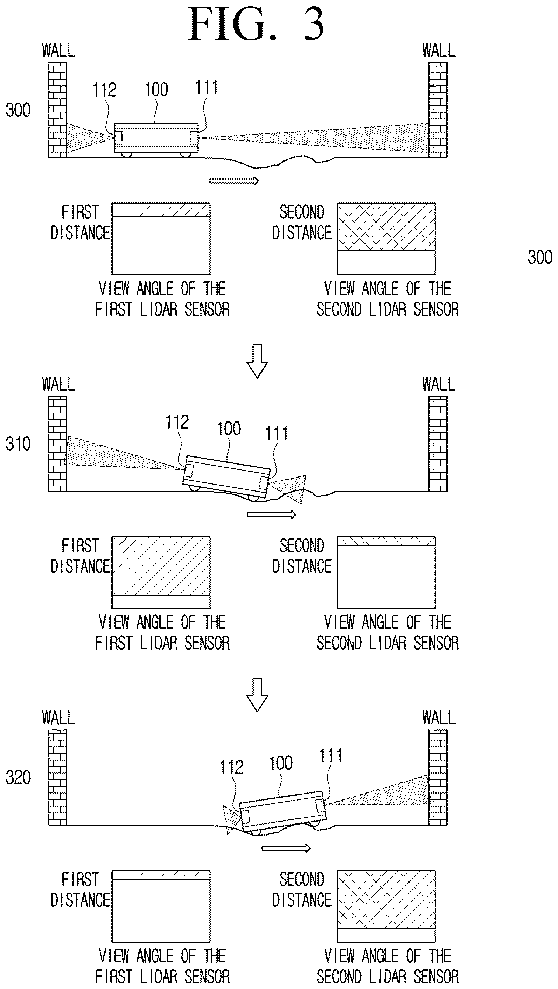

FIG. 3 is a diagram illustrating a LiDAR sensor according to an embodiment of the disclosure.

According to at least one embodiment, while the robot device 100 drives according to control by the at least one processor 133, the at least one processor 133 may obtain map information of the space wherein the robot device 100 is located according to any appropriate method, e.g., a SLAM operation, and identify the current location of the robot device 100 in the space.

Referring to scenario 300 in FIG. 3, if the robot device 100 drives in a flat area, a light shot by the first LiDAR sensor 111 is reflected on an obstacle located in the first direction (e.g., a wall, etc.) based on the robot device 100, and the light reflected on the obstacle may be received by the first LiDAR sensor 111.

According to an embodiment, the at least one processor 133 may identify a first distance from an obstacle located on the front side of the robot device 100 based on the first sensing data received from the first LiDAR sensor 111.

A light shot by the second LiDAR sensor 112 is reflected on an obstacle located in the second direction based on the robot device 100, and the light reflected on the obstacle may be received by the second LiDAR sensor 112.

According to an embodiment, the at least one processor 133 may identify a second distance from an obstacle located on the rear side of the robot device 100 based on the second sensing data received from the second LiDAR sensor 112.

According to an embodiment, if the robot device 100 drives in a flat area, the first distance from the obstacle detected through the first LiDAR sensor 111 may decrease regularly, and the second distance from the obstacle detected through the second LiDAR sensor 112 may increase regularly.

According to an embodiment, if an obstacle is located on the front side of the robot device 100, and the robot device 100 moves in the first direction, the distance between the robot device 100 and the obstacle decreases to correspond to the moving speed of the robot device 100, and accordingly, the first distance from the obstacle detected through the first LiDAR sensor 111 may decrease regularly.

Also, if an obstacle is located on the rear side of the robot device 100, the robot device 100 moves in the first direction, and thus the distance between the robot device 100 and the obstacle increases to correspond to the moving speed of the robot device 100, and accordingly, the second distance from the obstacle detected through the second LiDAR sensor 112 may increase regularly.

According to an embodiment, while the robot device 100 drives, if the first distance from an obstacle located on the front side decreases regularly (e.g., to correspond to the moving speed of the robot device 100) based on the first sensing data received from the first LiDAR sensor 111, or the second distance from an obstacle located on the rear side increases regularly (e.g., to correspond to the moving speed of the robot device 100) based on the second sensing data received from the second LiDAR sensor 112, the at least one processor 133 may identify the area wherein the robot device 100 moved according to the driving of the robot device 100 as a flat area.

The at least one processor 133 may obtain information related to a flat area including at least one of the location, the size, or the form of an area identified as a flat area while obtaining map information.

Referring to scenario 310 and scenario 320 of FIG. 3, if at least one of the first distance from an obstacle detected through the first LiDAR sensor 111 or the second distance from an obstacle detected through the second LiDAR sensor 112 increases and decreases rapidly, the at least one processor 133 may identify the area wherein the robot device 100 moved as a non-flat area.

As illustrated in scenario 310 of FIG. 3, while the robot device 100 drives in a non-flat area, if the robot device 100 is tilted forward, a light shot by the first LiDAR sensor 111 is reflected on the bottom and is then detected, and thus the first distance from an obstacle (e.g., the bottom) identified based on the first sensing data received from the first LiDAR sensor 111 may decrease rapidly.

For example, a changed amount of the first distance from an obstacle located on the front side of the robot device 100 may not decrease in correspondence with the moving speed of the robot device 100, rather the changed amount of the first distance may exceed the moving speed of the robot device 100.

For example, while the robot device 100 drives in a flat area, a light shot by the first LiDAR sensor 111 is reflected on a wall located on the front side of the robot device 100 (e.g., scenario 300), and while the robot device 100 drives in a non-flat area, if the robot device 100 is tilted forward, a light shot by the first LiDAR sensor 111 is reflected on the bottom located on the front side of the robot device 100 (e.g., scenario 310), and thus the first distance from an obstacle identified based on the first sensing data received from the first LiDAR sensor 111 may decrease rapidly.

As illustrated in scenario 320 of FIG. 3, while the robot device 100 drives in a non-flat area, if the robot device 100 is tilted backward, a light shot by the second LiDAR sensor 112 is reflected on the bottom and is then detected, and thus the second distance from an obstacle (e.g., the bottom) identified based on the second sensing data received from the second LiDAR sensor 112 may decrease rapidly.

For example, a changed amount of the second distance from an obstacle located on the rear side of the robot device 100 may not increase in correspondence with the moving speed of the robot device 100, rather the changed amount of the second distance may exceed the moving speed of the robot device 100.

For example, while the robot device 100 drives in a flat area, a light shot by the second LiDAR sensor 112 is reflected on a wall located on the rear side of the robot device 100, and while the robot device 100 drives in a non-flat area, if the robot device 100 is tilted backward, a light shot by the second LiDAR sensor 112 is reflected on the bottom located on the rear side of the robot device 100, and thus the second distance from an obstacle identified based on the second sensing data received from the second LiDAR sensor 112 may decrease rapidly.

According to an embodiment, while the robot device 100 drives, if rapid increase or rapid decrease of the first distance is identified based on the first sensing data received from the first LiDAR sensor 111, or rapid increase or rapid decrease of the second distance is identified based on the second sensing data received from the second LiDAR sensor 112, the at least one processor 133 may identify the area wherein the robot device 100 is located as a non-flat area.

The at least one processor 133 may obtain information related to a non-flat area including at least one of the location, the size, or the form of an area identified as a non-flat area while obtaining map information.

According to an embodiment, the at least one processor 133 may predict the location of the robot device 100 on a time point when a non-flat area is identified. Then, the at least one processor 133 may adjust the predicted location to the actual location of the robot device 100 based on the first sensing data received from the first LiDAR sensor 111, the second sensing data received from the second LiDAR sensor 112, and an image received from the camera 113. Then, the at least one processor 133 may map an area corresponding to the adjusted location on the map to the non-flat area.

According to an embodiment, while obtaining map information of the space wherein the robot device 100 is located according to a SLAM operation, the at least one processor 133 may identify at least one of the location, the size, or the form of a non-flat area within the space by identifying (or, dividing, extracting) an area mapped to the non-flat area.

Also, the at least one processor 133 may predict the location of the robot device 100 on a time point when a flat area is identified. Then, the at least one processor 133 may adjust the predicted location to the actual location of the robot device 100 based on the first sensing data received from the first LiDAR sensor 111, the second sensing data received from the second LiDAR sensor 112, and an image received from the camera 113. Then, the at least one processor 133 may map an area corresponding to the adjusted location on the map to the flat area.

According to an embodiment, while obtaining map information of the space wherein the robot device 100 is located according to a SLAM operation, the at least one processor 133 may identify at least one of the location, the size, or the form of a flat area within the space by identifying (or, dividing, extracting) an area mapped to the flat area.

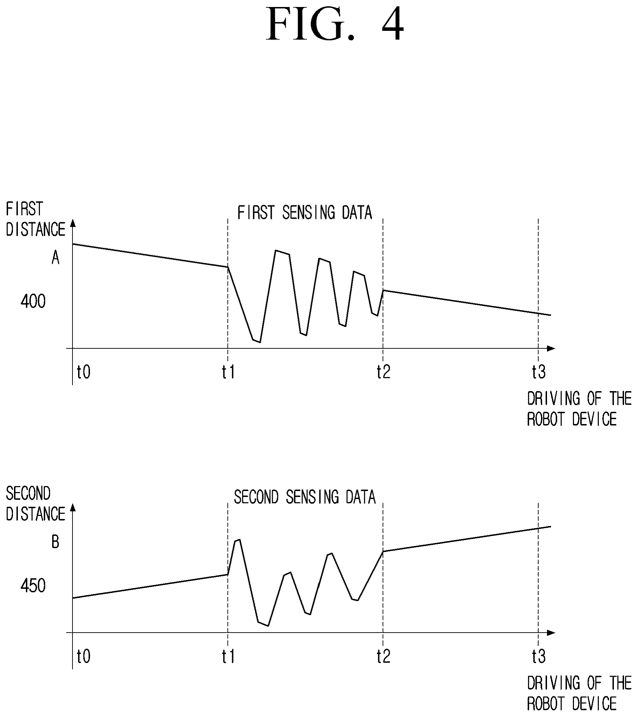

FIG. 4 is a diagram illustrating first sensing data and second sensing data according to an embodiment of the disclosure.

Referring to scenario 300 of FIG. 3 and the t0-t1 time section in diagram 400 of FIG. 4, if the robot device 100 drives in a flat area, the first distance (A) from the wall located on the front side of the robot device 100 may decrease to correspond to the moving speed of the robot device 100.

Also, if the robot device 100 moves in a flat area, the second distance (B) from the wall located on the rear side of the robot device 100 may increase to correspond to the moving speed of the robot device 100, as shown in the t0-t1 time section in diagram 450 of FIG. 4.

According to an embodiment, if the first distance (A) decreases to correspond to the moving speed of the robot device 100, or the second distance (B) increases to correspond to the moving speed of the robot device 100, the at least one processor 133 may identify the area wherein the robot device 100 moved as a flat area.

According to an embodiment, if an obstacle is not located on the front side of the robot device 100, the at least one processor 133 may identify the first distance (A) as '0' or infinite. For example, if an obstacle is not located on the front side of the robot device 100, a light shot by the first LiDAR sensor 111 is not reflected on an obstacle, and thus if a light shot by the first LiDAR sensor 111 does not return for a threshold time or more, the at least one processor 133 may identify the first distance (A) as '0' or infinite. According to an embodiment, if the first distance (A) is identified as '0' or infinite while the robot device 100 drives, the at least one processor 133 may identify the area wherein the robot device 100 moved as a flat area.

According to an embodiment, if an obstacle is not located on the rear side of the robot device 100, the at least one processor 133 may identify the second distance (B) as '0' or infinite. Also, according to an embodiment, while the robot device 100 drives, if the second distance (B) is identified as '0' or infinite, the at least one processor 133 may identify the area wherein the robot device 100 moved as a flat area.

According to an embodiment, due to the specification of the LiDAR sensor 110, if an obstacle is not detected within the maximum distance that can be detected by the LiDAR sensor 110, for example, the at least one processor 133 may not identify the area wherein the robot device 100 is located as a flat area, but identify the area as a flat area or a non-flat area based on sensing data of another sensor (e.g., the inertial measurement unit (IMU), the camera 113), etc. other than the LiDAR sensor 110.

Accordingly, the at least one processor 133 can obviously identify a non-flat area based on sensing data received from at least one sensor among the plurality of sensors such as the LiDAR sensor 110, the camera 113, the inertial measurement unit (IMU), etc.

Referring to scenario 310 of FIG. 3 and the t1-t2 time section in diagram 400 of FIG. 4, if the robot device 100 drives in a non-flat area, in particular, if the robot device 100 is tilted forward, the first distance (A) from an obstacle (e.g., the bottom) located on the front side of the robot device 100 may decrease rapidly. Accordingly, as shown in the t1-t2 time section in diagram 450 of FIG. 4, the second distance (B) from an obstacle (e.g., the wall) located on the rear side of the robot device 100 may increase rapidly.

Referring to scenario 320 of FIG. 3 and the t1-t2 time section in diagram 400 of FIG. 4, if the robot device 100 driving in a non-flat area is tilted backward, the obstacle located on the front side of the robot device 100 is changed to the wall but not the bottom, and thus the first distance (A) from the obstacle may increase rapidly. Also, as the obstacle located on the rear side of the robot device 100 is changed to the bottom but not the wall, the second distance (B) from the obstacle may decrease rapidly.

According to an embodiment, as illustrated in the t1-t2 time section in diagrams 400 and 450 of FIG. 4, if rapid increase or decrease of the distance from the obstacle (e.g., the first distance (A) or the second distance (B)) is repeatedly detected based on at least one of the first sensing data or the second sensing data, the at least one processor 133 may identify the area wherein the robot device 100 moved as a non-flat area.

In the various embodiments of the disclosure, rapid decrease and rapid increase may include change of a distance (decrease of a distance, increase of a distance) that exceeds a unit time multiplied by the moving speed of the robot device 100.

For example, if increase and decrease of the first distance are repeated, or increase and decrease of the second distance are repeated during a predetermined time (e.g., 10sec), and a changed amount of the distance exceeds the predetermined time multiplied by the moving speed of the robot device 100, the at least one processor 133 may identify the area wherein the robot device 100 moved as a non-flat area.

Here, the predetermined time may be inverse-proportional to the moving speed of the robot device 100. For example, as the moving speed of the robot device 100 moving in a non-flat area is faster, increase and decrease of a distance between the LiDAR sensor 110 and an obstacle are repeated faster, and thus the at least one processor 133 may identify whether the area wherein the robot device 100 moved is a non-flat area by identifying increase and decrease of the distance during a relatively shorter time.

For example, as the moving speed of the robot device 100 moving in a non-flat area is slower, increase and decrease of a distance between the LiDAR sensor 110 and the bottom are repeated more slowly, and thus the at least one processor 133 may identify whether the area wherein the robot device 100 is located is a non-flat area by identifying increase and decrease of the distance during a relatively longer time.

Accordingly, as illustrated in the t1-t2 time section in diagrams 400 and 450 of FIG. 4, if an increase-decrease pattern or fluctuation of the distance (or, the progress of change of the distance) from the bottom detected in the first direction does not correspond to the moving speed of the robot device 100, or the increase-decrease pattern or fluctuation of the distance from the bottom detected in the second direction does not correspond to the moving speed of the robot device 100, the at least one processor 133 may identify the area wherein the robot device 100 is located in the t1-t2 time section as a non-flat area.

In the aforementioned embodiment, it is assumed that the at least one processor 133 identifies the area wherein the robot device 100 is located as a non-flat area based on a change of the distance (e.g., an increase-decrease pattern or fluctuation of the distance, the progress of change of the distance, etc. However, the disclosure is not limited thereto, and the at least one processor 133 can identify the area wherein the robot device 100 is located as a non-flat area in consideration of change of a distance from an obstacle.

For example, as illustrated in the t1-t2 time section in diagrams 400 and 450 of FIG. 4, if an increase-decrease pattern or fluctuation of the distance (or, the progress of change of the distance) from an obstacle (e.g., a wall or equipment, etc.) detected in the first direction does not increase or decrease to correspond to the moving speed of the robot device 100 (or, regularly according to the moving of the robot device 100), or an increase-decrease pattern or fluctuation of the distance from an obstacle detected in the second direction does not increase or decrease to correspond to the moving speed of the robot device 100, the at least one processor 133 may identify the area wherein the robot device 100 is located as a non-flat area in the t1-t2 time section.

According to an embodiment, the at least one processor 133 may identify an area wherein the robot device 100 moved as a flat area or a non-flat area based on at least one of the first sensing data or the second sensing data, and obtain bottom information wherein the space is divided into a flat area or a non-flat area.

According to an embodiment, the bottom information may include a plurality of sub spaces, and each of the plurality of sub spaces may correspond to a flat area and a non-flat area.

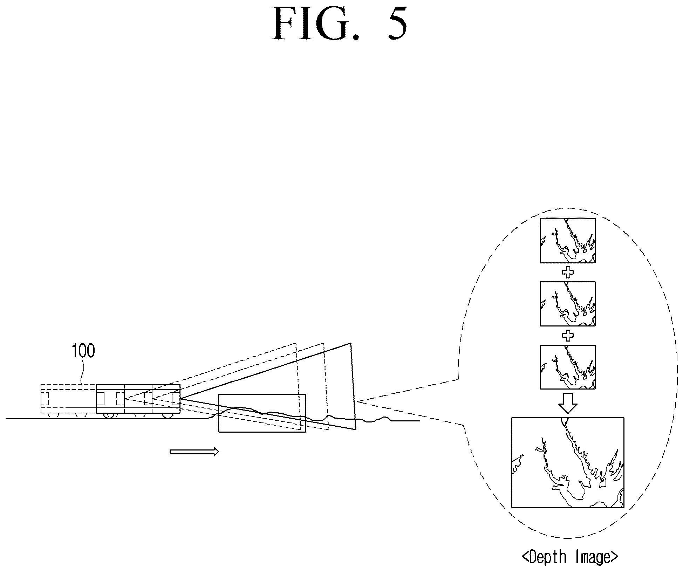

FIG. 5 is a diagram illustrating a depth image according to an embodiment of the disclosure.

The robot device 100 according to an embodiment may include a depth camera.

The depth camera may include a Time of Flight (ToF) camera sensor.

The ToF camera sensor may irradiate a signal (e.g., near infrared rays, ultrasonic waves, laser, etc.), and when the irradiated signal is reflected by a subject, receive the reflected signal. The at least one processor 133 may measure the distance (or, the depth) between the ToF camera sensor and the subject by measuring the time that was taken for the ToF camera sensor to receive the reflected signal. According to an embodiment, the at least one processor 133 may obtain the depth information of the subject based on the distance between the ToF camera sensor and the subject.

The ToF camera sensor is merely an example, and the disclosure is not limited thereto, and the robot device 100 can obviously include a radar sensor, an ultrasonic sensor, an infrared sensor, etc.

According to an embodiment, the at least one processor 133 may control the depth camera to capture a bottom corresponding to the location of the robot device 100.

For example, the depth camera may irradiate a signal in the first direction corresponding to the front side of the robot device 100, and receive the signal reflected from a subject (e.g., the bottom).

According to an embodiment, the at least one processor 133 may obtain a plurality of depth images by controlling the depth camera to capture a subject by a predetermined time interval.

According to an embodiment, for each of the plurality of depth images, a synthetic depth image indicating a difference in the height of a subject may be obtained.

For example, the at least one processor 133 may identify an area that is not flat (i.e., a non-flat area) due to a difference in the height of the bottom based on the plurality of depth images.

For example, the at least one processor 133 may obtain a synthetic depth image based on a plurality of depth images, and the synthetic depth image may be a 3D image indicating a difference in the height (or, change of the height) of the bottom by performing 3D modeling of the bottom.

According to an embodiment, the at least one processor 133 may identify a plurality of sub spaces by dividing a space into a flat area and a non-flat area based on the first sensing data of the first LiDAR sensor 111 and the second sensing data of the second LiDAR sensor 112.

For example, the at least one processor 133 may divide a space into a plurality of sub spaces by identifying an independent area surrounded by walls in the space. The at least one processor 133 may also divide a space into a plurality of sub spaces by identifying furniture, steps, a threshold, etc. in the space.

According to an embodiment, the at least one processor 133 may divide each of the plurality of sub spaces into a flat area and a non-flat area. However, the disclosure is not limited thereto, and the at least one processor 133 may divide a part of any one sub space as a non-flat area, and divide the remaining part as a flat area.

According to an embodiment, the at least one processor 133 may identify change of the height of the bottom of a sub space (or, a part of a sub space) corresponding to a non-flat area among the plurality of sub spaces based on the plurality of depth images received from the depth camera. Also, according to an embodiment, the at least one processor 133 may control the driving of the robot device 100 based on the identified change of the height.

According to an embodiment, the at least one processor 133 may also divide a space into a plurality of sub spaces based on the plurality of depth images received from the depth camera.

For example, while obtaining the map information, the at least one processor 133 may obtain a 3D image indicating change of the height of the bottom inside a space, and obtain information related to a non-flat area indicating an area wherein change of the height is detected (or, an area wherein change of the height is not included in a threshold range) as a non-flat area, and obtain information related to a flat area indicating an area wherein change of the height is not detected (or, an area wherein change of the height is included in the threshold range) as a flat area.

As described above, the at least one processor 133 may obtain bottom information including information related to a flat area and information related to a non-flat area inside a space.

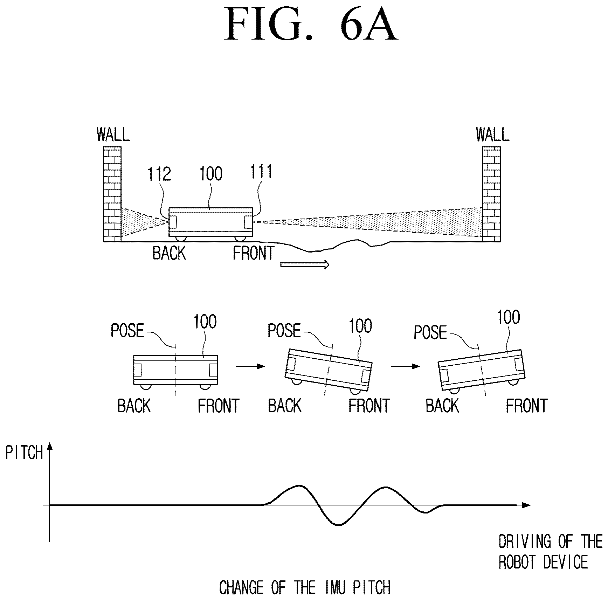

FIG. 6A is a diagram illustrating change of a pitch of a robot device based on an inertial measurement unit according to an embodiment of the disclosure.

The robot device 100 according to an embodiment may include an inertial measurement unit (IMU).

The inertial measurement unit (referred to as an IMU hereinafter) according to an embodiment may include at least one of a gyroscope sensor, an accelerometer sensor, or a magnetometer or compass sensor. The robot device 100 may identify whether the robot device 100 is tilted, the tilted direction, the tilted degree, etc. of the robot device 100 based on sensing values of various kinds of inertial measurement units.

According to an embodiment, the IMU may obtain each of a roll, a pitch, and a yaw indicating a pose of the robot device 100 as the third sensing data. Here, a roll may indicate tilting of the robot device 100 in left and right directions (e.g., a rotation angle based on an x axis (a longitudinal axis)), a pitch may indicate tilting of the robot device 100 in front and rear (forward and backward) directions (e.g., a rotation angle based on a y axis (a horizontal axis)), and a yaw may indicate tilting of the robot device 100 in a z axis direction (e.g., a rotation angle based on a z axis (a vertical axis)).

According to an embodiment, the at least one processor 133 may detect a pose of the robot device 100 based on the third sensing data received from the IMU.

FIG. 6A is a side view of the robot device 100, and while the robot device 100 moves in a non-flat area, a pitch of the robot device 100 may change.

For example, if the robot device 100 is tilted forward, a pitch according to the third sensing data received from the IMU may be a positive (+) value, and if the robot device 100 is tilted backward, a pitch according to the third sensing data received from the IMU may be a negative (-) value. It should be understood that the disclosure is not limited to this embodiment.

The at least one processor 133 according to an embodiment may detect a pose of the robot device 100 based on the third sensing data, and if the detected pose exceeds a threshold angle (e.g., if the pitch of the robot device 100 exceeds a threshold value), the at least one processor 133 may identify the area wherein the robot device 100 moved as the pose of the robot device 100 is tilted forward, or tilted backward as a non-flat area.

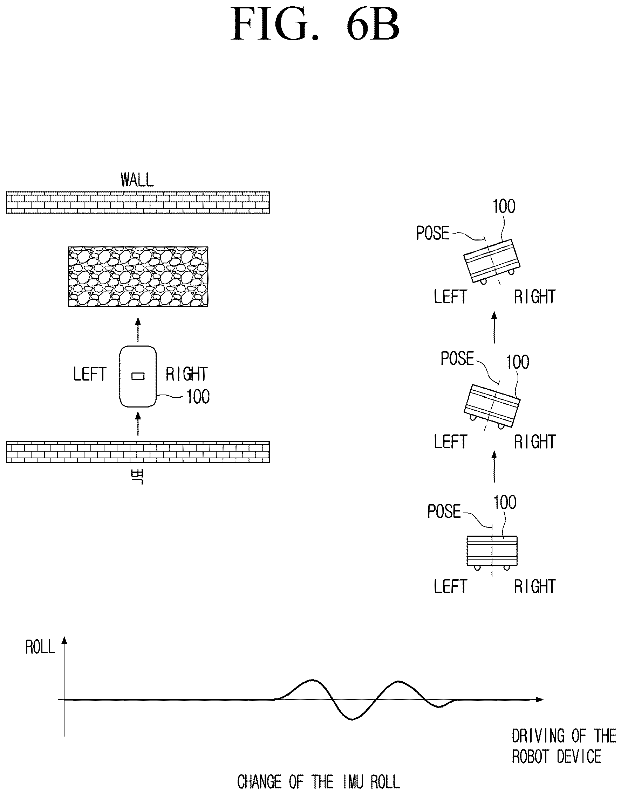

FIG. 6B is a diagram illustrating change of a roll of a robot device based on an inertial measurement unit according to an embodiment of the disclosure.

The drawing on the upper left side of FIG. 6B includes a plan view illustrating the robot device 100 and a wall from the above.

While the robot device 100 moves in a non-flat area, a roll of the robot device 100 may change.

For example, if the robot device 100 is tilted to the right side, a roll according to the third sensing data received from the IMU may be a positive (+) value, and if the robot device 100 is tilted to the left side, a roll according to the third sensing data received from the IMU may be a negative (-) value. It should be understood that the disclosure is not limited to this embodiment.

The at least one processor 133 according to an embodiment may detect a pose of the robot device 100 based on the third sensing data, and if the detected pose exceeds a threshold angle (e.g., if the roll of the robot device 100 exceeds a threshold value), the at least one processor 133 may identify the area wherein the robot device 100 moved as the pose of the robot device 100 is tilted to the right side, or tilted to the left side as a non-flat area.

According to an embodiment, the at least one processor 133 may identify the area wherein the robot device 100 moved as a flat area or a non-flat area based on at least one of the sensing data of the LiDAR sensor 110 (e.g., the first sensing data and the second sensing data) or the third sensing data of the IMU.

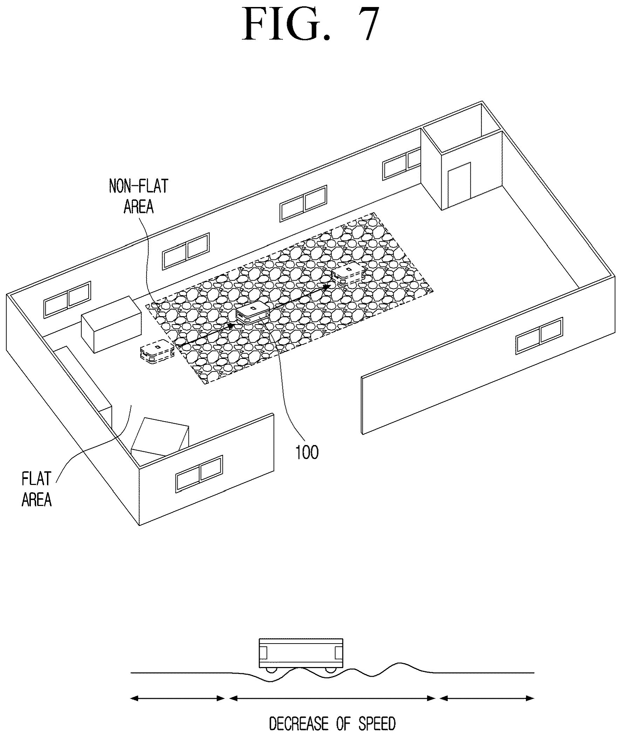

FIG. 7 is a diagram for illustrating a driving level according to an embodiment of the disclosure.

The at least one processor 133 according to an embodiment may control the robot device 100 to drive in any one driving level among a plurality of driving levels.

For example, the plurality of driving levels may be divided based on the driving speed of the robot device 100. Each of the plurality of driving levels according to an embodiment of the disclosure may include information for controlling driving of the robot device 100.

For example, the information for controlling driving may include a driving speed range of the robot device 100 (e.g., the lowest speed and the highest speed), the average driving speed of the robot device 100, etc.

For example, the first driving level among the plurality of driving levels may include high speed driving of the robot device 100, the second driving level may include general driving of the robot device 100, the third driving level may include low speed driving of the robot device 100, and the fourth driving level may include evasive driving of the robot device 100. However, this is merely an example for the convenience of explanation, and the disclosure is not limited thereto. For example, the first driving level may include high speed driving of the robot device 100, and the second driving level may include low speed driving of the robot device 100.

However, the disclosure is not limited thereto, and the information for controlling driving may include operation modes of the robot device 100. For example, the first driving level among the plurality of driving levels may include a power mode of the robot device 100 (e.g., a high output mode), the second driving level may include a general mode of the robot device 100, and the third driving level may include a lower power mode (e.g., an echo mode) of the robot device 100. According to an embodiment, each of the plurality of driving levels may include information for controlling the speed related to an operation of a gripper provided on the robot device 100 (e.g., a robot hand which is a distal end of an articulated robot), a rotation radius, and an output of a motor (the number of rotations of a motor) provided on the robot device 100.

The at least one processor 133 according to an embodiment may operate (or, drive) the robot device 100 in any one driving level among the plurality of driving levels based on sensing data (e.g., the first sensing data, the second sensing data, a depth image, the third sensing data, etc.) received from a sensor provided on the robot device 100 (e.g., the LiDAR sensor 110, the depth camera, the IMU, etc.). For example, the at least one processor 133 may identify a driving level corresponding to the current location of the robot device 100 among the plurality of driving levels based on the sensing data received from the sensor in real time.

According to an embodiment, the at least one processor 133 may obtain a driving route (or, a moving route) of the robot device 100 by identifying driving levels corresponding to each of a plurality of sub spaces in a space based on map information.

For example, if the first sub space among the plurality of sub spaces corresponds to a flat area based on the map information, the at least one processor 133 may identify the driving level of the first sub space as the first driving level among the plurality of driving levels, and if the second sub space corresponds to a non-flat area, the at least one processor 133 may identify the driving level of the second sub space as the second driving level among the plurality of driving levels. According to an embodiment, the driving speed of the robot device 100 according to the second driving level may be relatively slower than the driving speed according to the first driving level.

According to an embodiment, the at least one processor 133 may obtain a driving route wherein the robot device 100 drives in the first driving level while moving in the first sub space, and the robot device 100 drives in the second driving level while moving in the second sub space.

For example, if the robot device 100 drives in a non-flat area, there is a risk that threat may occur to an object (e.g., a person, an obstacle, etc.) adjacent to the robot device 100, and thus the at least one processor 133 may operate the robot device 100 in a driving level corresponding to the non-flat area (e.g., low speed driving) while the robot device 100 drives in the non-flat area based on the map information.

However, the disclosure is not limited thereto, and the at least one processor 133 may identify the driving level of the second sub space as evasive driving among the plurality of driving levels.

For example, if the robot device 100 drives in a non-flat area, there is a risk that an accident may occur, and thus the at least one processor 133 may control the robot device 100 such that the robot device 100 drives in an adjacent area of the non-flat area (e.g., a flat area adjacent to the non-flat area), and does not drive in the non-flat area. Accordingly, the at least one processor 133 may identify the driving level of the non-flat area as evasive driving based on the map information, and set the moving route of the robot device 100 such that the robot device 100 does not drive in the non-flat area.

According to an embodiment, the driving level information may include driving levels corresponding to each of a plurality of sub spaces, and the at least one processor 133 may control the driving of the robot device 100 based on a driving level of a sub space corresponding to the location of the robot device 100 among the plurality of sub spaces, which was obtained from the driving level information.

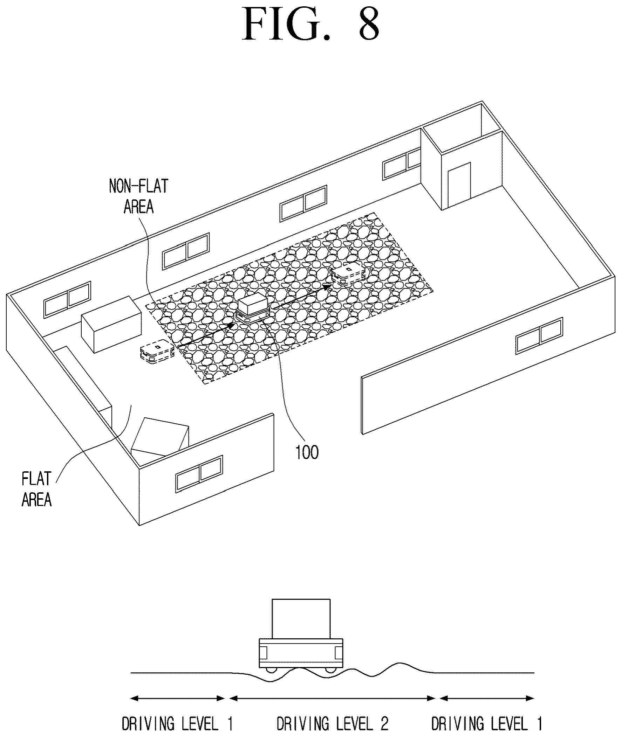

FIG. 8 is a diagram for illustrating an object loaded on a robot device according to an embodiment of the disclosure.

According to an embodiment, an object may be loaded on the robot device 100, and the robot device 100 may move the loaded object.

According to an embodiment, the robot device 100 may include a weight detection sensor, and the at least one processor 133 may detect the weight of the object loaded on the robot device 100 through the weight detection sensor.

According to an embodiment, the robot device 100 may identify any one driving level among the plurality of driving levels according to the weight of the loaded object.

For example, if the weight of the loaded object is smaller than a threshold value, or there is no loaded object, the at least one processor 133 may operate the robot device 100 in the first driving level among the plurality of driving levels.

For example, if there is no object loaded on the robot device 100, there is no risk that an accident may occur as the loaded object falls while the robot device 100 is driving, and thus the at least one processor 133 may control the robot device 100 to drive in the first driving level (e.g., high speed driving, general driving, etc.).

For example, if there is no object loaded on the robot device 100, there is no risk that the object loaded on the robot device 100 may fall even if the robot device 100 drives in a non-flat area, and thus the at least one processor 133 may control the robot device 100 to drive in both of a flat area and a non-flat area in the first driving level.

For example, if the weight of the loaded object is greater than or equal to the threshold value, the at least one processor 133 may operate the robot device 100 in the second driving level among the plurality of driving levels.

According to an embodiment, if the weight of the object loaded on the robot device 100 is greater than or equal to the threshold value, the at least one processor 133 may control the robot device 100 to drive in the first sub space corresponding to a flat area among the plurality of sub spaces in the first driving level, and control the robot device 100 to drive in the second sub space corresponding to a non-flat area in the second driving level.

For example, there is a risk that the object loaded on the robot device 100 may fall due to vibration generated while the robot device 100 is driving in a non-flat area, and thus the at least one processor 133 may control the robot device 100 to drive in the non-flat area in the second driving level (e.g., low speed driving).

However, the disclosure is not limited thereto, and if the weight of the object loaded on the robot device 100 is greater than or equal to the threshold value, there is a risk that the object loaded on the robot device 100 may fall even if the robot device 100 drives in a flat area, and thus the at least one processor 133 may control the robot device 100 to drive in both of a flat area and a non-flat area in the second driving level.

According to an embodiment, if the weight of the loaded object is greater than or equal to the threshold value, the at least one processor 133 may set a non-flat area as the fourth driving level (e.g., evasive driving) such that the robot device 100 does not drive in the non-flat area.

For example, if the weight of the loaded object is greater than or equal to the threshold value, there is a risk that a breakdown may be caused in the driver 120 of the robot device 100, or the object may fall if the robot device 100 drives in a non-flat area, and thus the at least one processor 133 may set a non-flat area as the fourth driving level (e.g., evasive driving) such that the robot device 100 does not drive in the non-flat area, and accordingly, the robot device 100 may not drive in the non-flat area, but drive in an adjacent flat area.

For example, if the weight of the loaded object is greater than or equal to the threshold value, and change of the height of a non-flat area exceeds a threshold range (e.g., if change of the height exceeds 5cm), the at least one processor 133 may set the non-flat area as the fourth driving level (e.g., evasive driving) such that the robot device 100 does not drive in the non-flat area, and accordingly, the robot device 100 may not drive in the non-flat area, but drive in an adjacent flat area.

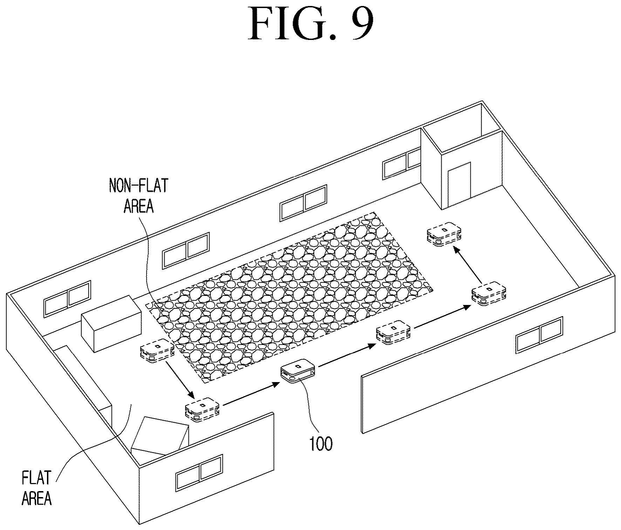

FIG. 9 is a diagram illustrating evasive driving of a robot device according to an embodiment of the disclosure.

According to an embodiment, the at least one processor 133 may obtain a driving route (or, a moving route) for the robot device 100 to drive in a space based on map information.

For example, the at least one processor 133 may identify each of a plurality of sub spaces as a flat area or a non-flat area.

According to an embodiment, the at least one processor 133 may obtain a moving route wherein, if the first sub space among the plurality of sub spaces corresponds to a flat area, the robot device 100 drives in the first sub space in the first driving level among the plurality of driving levels, and if the second sub space corresponds to a non-flat area, the robot device 100 drives in the second sub space in the second driving level.

According to an embodiment, the at least one processor 133 may adjust the moving route by using change of the height of the bottom identified based on a plurality of depth images received from the depth camera.

For example, the at least one processor 133 may obtain a moving route wherein the robot device 100 drives to avoid a non-flat area wherein change of the height of the bottom is greater than or equal to a threshold height.

For example, in a non-flat area wherein change of the height is greater than or equal to the threshold height, moving may be impossible (or, climbing may be impossible) through the driver provided in the robot device 100, or there is a risk that an object loaded on the robot device 100 may fall. Thus, according to an embodiment, the at least one processor 133 may set a moving route such that the robot device 100 drives to avoid a non-flat area wherein change of the height is greater than or equal to the threshold height.

According to an embodiment, the at least one processor 133 may adjust a moving route of the robot device 100 by using a pose of the robot device 100 identified based on the third sensing data received from the IMU.

For example, if at least one of a rotation angle based on the x axis (the longitudinal axis), a rotation angle based on the y axis (the horizontal axis), or a rotation angle based on the z axis (the vertical axis) of the robot device 100 exceeds a threshold angle, there is a risk that an object loaded on the robot device 100 may fall, and thus the at least one processor 133 may set a moving route such that the robot device 100 performs evasive driving.

Returning to FIG. 2, the robot device 100 according to an embodiment of the disclosure may include a camera.

According to an embodiment, the camera may capture a bottom corresponding to the location of the robot device 100, and the at least one processor 133 may obtain material information of the bottom by analyzing the image received from the camera.

According to an embodiment, the at least one processor 133 may control driving of the robot device 100 based on the material information.

For example, the at least one processor 133 may obtain a plurality of images by capturing the bottom by a predetermined time interval through the camera, and obtain the material information corresponding to the bottom of the space by analyzing each of the plurality of images.

For example, the material of the bottom may be divided into a material having a big friction coefficient and a material having a small friction coefficient. For example, the bottom may consist of various materials such as a carpet, tiles, sheets, linoleum, solid wood, epoxy, urethane, marble, flooring of a PVC material, etc., and a friction coefficient varies according to the material constituting the bottom.

The material of the bottom may be determined according to the materials (or matters) used for the bottoms of each of the plurality of sub spaces. For example, the material of the bottom of a sub space may be implemented as , etc.

According to an embodiment, the at least one processor 133 may identify the material of the bottom by analyzing an image that captured the bottom through the camera, and if the identified material is a slippery material (e.g., a material of which friction coefficient is smaller than or equal to a threshold value), the at least one processor 133 may adjust the driving level for driving of the robot device 100.

For example, if the first sub space among the plurality of sub spaces corresponds to a flat area, the at least one processor 133 may control the robot device 100 to drive in the first driving level while driving in the first sub space.

According to an embodiment, if the material of the bottom constituting the first sub space is a slippery material having a friction coefficient smaller than or equal to the threshold value, the robot device 100 may deviate from the moving route (e.g., slipping of the robot device 100) while driving in the first sub space, or there is a risk that fall of an object loaded on the robot device 100 may occur, and thus the at least one processor 133 may control the robot device 100 to drive in the second driving level while moving in the first sub space, or adjust the moving route such that the robot device 100 drives to avoid the first sub space. For example, the moving speed of the robot device 100 according to the second driving level may be slower than the moving speed of the robot device 100 according to the first driving level.

According to an embodiment, the at least one processor 133 may obtain the material information of the bottom by inputting an image that captured the bottom through the camera into a neural network model.

The neural network model according to an embodiment may be a model that was trained to output material information of a bottom if an image that captured the bottom is input by using a plurality of sample images that captured bottoms of various materials as training data.

Functions related to artificial intelligence according to the disclosure are operated through the at least one processor 133 and the memory of the robot device 100.

Here, the at least one processor 133 may include at least one of a central processing unit (CPU), a graphics processing unit (GPU), or a neural processing unit (NPU), but is not limited to the aforementioned examples of the processor.

A CPU is a generic-purpose processor that can perform not only general operations but also artificial intelligence operations, and it can effectively execute a complex program through a multilayer cache structure. A CPU is advantageous for a serial processing method that enables a systemic linking between the previous calculation result and the next calculation result through sequential calculations. Meanwhile, a generic-purpose processor is not limited to the aforementioned examples excluding cases wherein it is specified as the aforementioned CPU.

A GPU is a processor for mass operations such as a floating point operation used for graphic processing, etc., and it can perform mass operations in parallel by massively integrating cores. In particular, a GPU may be advantageous for a parallel processing method such as a convolution operation, etc. compared to a CPU. Also, a GPU may be used as a co-processor for supplementing the function of a CPU. Meanwhile, a processor for mass operations is not limited to the aforementioned examples excluding cases wherein it is specified as the aforementioned GPU.

An NPU is a processor specialized for an artificial intelligence operation using an artificial neural network, and it can implement each layer constituting an artificial neural network as hardware (e.g., silicon). Here, the NPU is designed to be specialized according to the required specification of a company, and thus it has a lower degree of freedom compared to a CPU or a GPU, but it can effectively process an artificial intelligence operation required by the company. Meanwhile, as a processor specialized for an artificial intelligence operation, an NPU may be implemented in various forms such as a tensor processing unit (TPU), an intelligence processing unit (IPU), a vision processing unit (VPU), etc. Meanwhile, an artificial intelligence processor is not limited to the aforementioned examples excluding cases wherein it is specified as the aforementioned NPU.

Also, the one or plurality of processors may be implemented as a system on chip (SoC). Here, in the SoC, the memory, and a network interface such as a bus for data communication between the processor and the memory, etc. may be further included other than the one or plurality of processors.

When a plurality of processors are included in the system on chip (SoC) included in the robot device 100, the robot device 100 may perform an operation related to artificial intelligence (e.g., an operation related to learning or inference of an artificial intelligence model) by using some processors among the plurality of processors. For example, the robot device 100 may perform an operation related to artificial intelligence by using at least one of a GPU, an NPU, a VPU, a TPU, or a hardware accelerator specified for artificial intelligence operations such as a convolution operation, a matrix product operation, etc. among the plurality of processors. However, this is merely an example, and the robot device 100 can obviously process an operation related to artificial intelligence by using a generic-purpose processor such as a CPU, etc.

Also, the robot device 100 may perform an operation for a function related to artificial intelligence by using a multicore (e.g., a dual core, a quad core, etc.) included in the at least one processor 133. In particular, the robot device 100 may perform an artificial intelligence operation such as a convolution operation, a matrix product operation, etc. in parallel by using the multicore included in the at least one processor 133.

The one or plurality of processors 133 perform control to process input data according to predefined operation rules or an artificial intelligence model stored in the memory. The predefined operation rules or the artificial intelligence model are characterized in that they are made through learning.

Here, being made through learning means that predefined operation rules or an artificial intelligence model having desired characteristics are made by applying a learning algorithm to a plurality of training data. Such learning may be performed in a device itself wherein artificial intelligence is performed according to the disclosure, or may be performed through a separate server/system.

An artificial intelligence model may consist of a plurality of neural network layers. At least one layer has at least one weight value, and performs an operation of the layer through an operation result of the previous layer and at least one defined operation. As examples of a neural network, there are a convolutional neural network (CNN), a deep neural network (DNN), a recurrent neural network (RNN), a restricted Boltzmann machine (RBM), a deep belief network (DBN), a bidirectional recurrent deep neural network (BRDNN), Deep Q-networks, and a Transformer, but the neural network in the disclosure is not limited to the aforementioned examples excluding cases clearly specified.

A learning algorithm is a method of training a specific subject device (e.g., a robot) by using a plurality of training data and thereby making the specific subject device make a decision or make prediction by itself. As examples of learning algorithms, there are supervised learning, unsupervised learning, semi-supervised learning, or reinforcement learning, but learning algorithms in the disclosure are not limited to the aforementioned examples excluding specified cases.

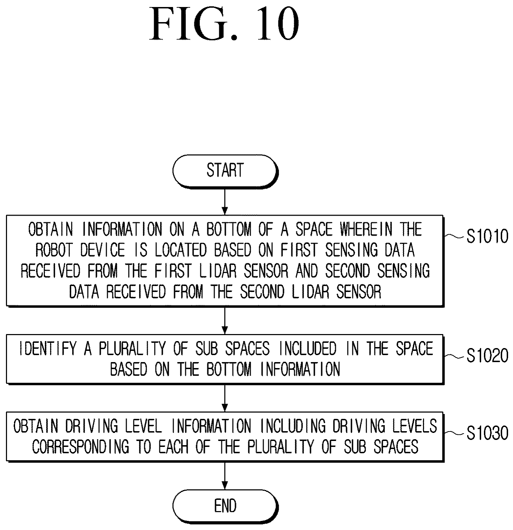

FIG. 10 is a flow chart for illustrating a control method of a robot device according to an embodiment of the disclosure.

Referring to FIG. 10, in a control method of a robot device for obtaining map information, information on a bottom of a space wherein the robot device is located is obtained based on first sensing data received from the first LiDAR sensor and second sensing data received from the second LiDAR sensor in operation S1010.

A plurality of sub spaces included in the space are identified based on the bottom information in operation S1020.

Driving level information including driving levels corresponding to each of the plurality of sub spaces is obtained in operation S1030.

The bottom information according to an embodiment may include information related to a flat area and a non-flat area in the space, and in the operation S1020 of identifying the plurality of sub spaces, the plurality of sub spaces may be identified by dividing the space into the flat area or the non-flat area based on the bottom information.

The operation S1030 of obtaining the driving level information includes the operations of, based on a bottom of a first sub space among the plurality of sub spaces corresponding to the flat area, identifying a driving level of the first sub space as a first driving level, and based on a bottom of a second sub space among the plurality of sub spaces corresponding to the non-flat area, identifying a driving level of the second sub space as a second driving level, and the driving speed of the robot device according to the second level may be relatively slower than the driving speed of the robot device according to the first level.

According to an embodiment, the operation S1020 of identifying the plurality of sub spaces may include the step of, based on a distance between the first LiDAR sensor and the bottom on which the robot device is located included in the first sensing data repeating increase and decrease, and a distance between the second LiDAR sensor and the bottom included in the second sensing data repeating increase and decrease, identifying the area wherein the robot device is located as a non-flat area.

According to an embodiment, the operation of identifying the area wherein the robot device is located as a non-flat area may include the step of, based on the first sensing data and the second sensing data, if a pattern of increase and decrease of the distance or a fluctuation of the distance to the bottom detected in the first direction does not correspond to the moving speed of the robot device, or a pattern of increase and decrease of the distance or a fluctuation of the distance to the bottom detected in the second direction does not correspond to the moving speed of the robot device in a first time section, identifying the area wherein the robot device is located in the first time section as the non-flat area.

The control method according to an embodiment of the disclosure may include the operations of obtaining a plurality of depth images by controlling the depth camera to capture the bottom corresponding to the location of the robot device by a predetermined time interval, and identifying a plurality of sub spaces included in the space based on the plurality of depth images.

The control method according to an embodiment of the disclosure may further include the step of detecting a pose of the robot device based on third sensing data received from the inertial measurement unit (IMU), and the operation S1020 of identifying the plurality of sub spaces may include the step of identifying the plurality of sub spaces based on the pose of the robot device and the bottom information, and the third sensing data may include at least one of a roll, a pitch, or a yaw indicating the pose of the robot device.

The operation S1020 of identifying the plurality of sub spaces may include the operations of, based on at least one of the roll, the pitch, or the yaw being greater than or equal to a threshold angle, identifying the pose of the robot device as a tilt, and identifying the area wherein the robot device is located that was identified by the tilt as a non-flat area.

The control method according to an embodiment of the disclosure may include the operations of obtaining an image by controlling the camera to capture the bottom corresponding to the location of the robot device, obtaining material information of the bottom based on the image, and obtaining driving level information including driving levels corresponding to each of the plurality of sub spaces based on the material information.

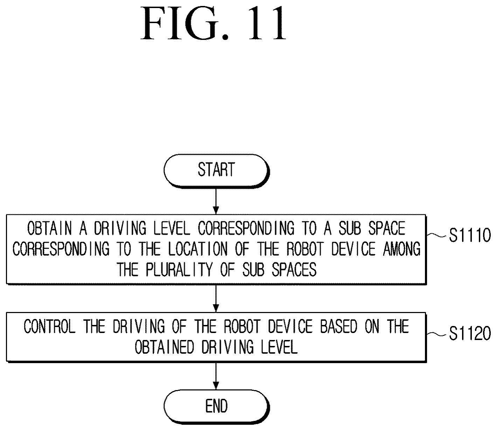

FIG. 11 is a flow chart for illustrating a method of controlling driving of a robot device according to an embodiment of the disclosure.

Referring to FIG. 11, in a control method of a robot device for controlling driving of a robot device, a driving level of a sub space corresponding to the location of the robot device among the plurality of sub spaces is obtained from driving level information in operation S1110.

The driving of the robot device is controlled based on the obtained driving level in operation S1110.

The control method according to an embodiment of the disclosure may further include the operations of obtaining a plurality of depth images by controlling the depth camera to capture the bottom corresponding to the location of the robot device by a predetermined time interval, identifying change of the height of a bottom of a sub space corresponding to a non-flat area among the plurality of sub spaces based on the plurality of depth images, and controlling the driving of the robot device based on the identified change of the height.

The control method according to an embodiment of the disclosure may further include the operations of identifying a pose of the robot device based on third sensing data received from the inertial measurement unit (IMU), and controlling the driving of the robot device based on the pose of the robot device.

The control method according to an embodiment of the disclosure may further include the operations of obtaining an image by controlling the camera to capture the bottom corresponding to the location of the robot device, obtaining material information of the bottom based on the image, and controlling the driving of the robot device based on the material information.

The control method according to an embodiment of the disclosure may include the operations of detecting a weight of an object loaded on the robot device, and based on the detected weight being greater than or equal to a threshold value, controlling the driving of the robot device by identifying the driving level corresponding to the sub space corresponding to the location of the robot device among the plurality of sub spaces, and based on the detected weight being smaller than the threshold value, controlling the driving of the robot device without changing the driving level.

The various embodiments of the disclosure can not only be applied to a robot device, but also to electronic devices in various types.

Meanwhile, the aforementioned various embodiments of the disclosure may be implemented in a recording medium that is readable by a computer or a device similar thereto, by using software, hardware or a combination thereof. In some cases, the embodiments described in this specification may be implemented as a processor itself. According to implementation by software, the embodiments such as procedures and functions described in this specification may be implemented as separate software modules. Each of the software modules may perform one or more functions and operations described in this specification.

Meanwhile, computer instructions for executing the processing operations of the robot device according to the aforementioned various embodiments of the disclosure may be stored in a non-transitory computer-readable medium. Such computer instructions stored in a non-transitory computer-readable medium may make the processing operations at the robot device 100 according to the aforementioned various embodiments performed by a specific machine, when they are executed by a processor.

A non-transitory computer-readable medium refers to a medium that stores data semi-permanently, and is readable by machines, but not a medium that stores data for a short moment such as a register, a cache, and memory. As specific examples of a non-transitory computer-readable medium, there may be a CD, a DVD, a hard disc, a blue-ray disc, a USB, a memory card, a ROM, and the like.

Also, while preferred embodiments of the disclosure have been shown and described, the disclosure is not limited to the aforementioned specific embodiments, and it is apparent that various modifications may be made by those having ordinary skill in the technical field to which the disclosure belongs, without departing from the gist of the disclosure as claimed by the appended claims. Further, it is intended that such modifications are not to be interpreted independently from the technical idea or prospect of the disclosure.

## Claims

1. A robot device comprising:
memory;
a first LiDAR sensor configured to detect obstacles in a first direction;
a second LiDAR sensor configured to detect obstacles in a second direction that is opposite to the first direction; and
at least one processor configured to:
obtain bottom information about a bottom of a space where the robot device is located based on first sensing data received from the first LiDAR sensor and second sensing data received from the second LiDAR sensor,
identify a plurality of sub spaces included in the space based on the bottom information,
obtain driving level information, wherein the driving level information comprises driving levels associated with each of the plurality of sub spaces and store the driving level information in the memory, and
control a movement of the robot device based on a driving level of a sub space corresponding to a location of the robot device, the sub space being among the plurality of sub spaces, and wherein the driving level is obtained from the driving level information stored in the memory.

2. The robot device of claim 1,
wherein the bottom information comprises:
information related to a flat area and a non-flat area in the space, and
the at least one processor is further configured to:
identify the plurality of sub spaces by dividing the space into the flat area or the non-flat area based on the bottom information.

3. The robot device of claim 2,
wherein the at least one processor is further configured to:
based on a bottom of a first sub space among the plurality of sub spaces corresponding to the flat area, identify the driving level of the first sub space as a first driving level, and
based on a bottom of a second sub space among the plurality of sub spaces corresponding to the non-flat area, identify the driving level of the second sub space as a second driving level, and
wherein a driving speed of the robot device at the second driving level is slower than the driving speed of the robot device at the first driving level.

4. The robot device of claim 1,
wherein the at least one processor is further configured to:
based on a fluctuation in a first distance and a second distance, identifying an area wherein the robot device is located as a non-flat area, wherein the first distance is between the first LiDAR sensor and the bottom on which the robot device is located, and the second distance is between the second LiDAR sensor and the bottom.

5. The robot device of claim 4,
wherein the at least one processor is further configured to:
identify the area wherein the robot device is located in a first time section as the non-flat area, based on the first sensing data and the second sensing data, if a first pattern of increase and decrease of the first distance to the bottom detected in the first direction does not correspond to a driving speed of the robot device, or a second pattern of increase and decrease of the second distance to the bottom detected in the second direction does not correspond to the driving speed of the robot device in the first time section.

6. The robot device of claim 1, further comprising:
a depth camera,
wherein the at least one processor is further configured to:
obtain a plurality of depth images using the depth camera to capture the bottom corresponding to the location of the robot device at a predetermined time interval,
identify a change of a height of a bottom of a sub space corresponding to a non-flat area among the plurality of sub spaces based on the plurality of depth images, and
control the movement of the robot device based on the change of the height.

7. The robot device of claim 1, further comprising:
an inertial measurement unit (IMU),
wherein the at least one processor is further configured to:
detect a pose of the robot device based on third sensing data received from the IMU, and
identify the plurality of sub spaces based on the detected pose and the bottom information,
wherein the third sensing data comprises:
at least one of a roll, a pitch, or a yaw indicating the pose of the robot device.

8. The robot device of claim 7,
wherein the at least one processor is further configured to:
based on at least one of the roll, the pitch, or the yaw being greater than or equal to a threshold angle, identify the pose of the robot device as a tilt, and
identify an area that was identified by the tilt as a non-flat area.

9. The robot device of claim 1, further comprising:
a camera,
wherein the at least one processor is further configured to:
obtain an image using the camera to capture the bottom corresponding to the location of the robot device,
obtain material information of the bottom based on the image, and
control the movement of the robot device based on the material information.

10. The robot device of claim 1,
wherein the at least one processor is further configured to:
detect a weight of an object loaded on the robot device,
based on the detected weight being greater than or equal to a threshold value, control the movement of the robot device by identifying the driving level of the sub space corresponding to the location of the robot device, and
based on the detected weight being smaller than the threshold value, control the movement of the robot device without changing the driving level.

11. A control method of an electronic device, the method comprising:
receiving first sensing data from a first LiDAR sensor in a first direction based on the robot device;
receiving second sensing data from a second LiDAR sensor in a second direction that is opposite to the first direction;
obtaining bottom information about a bottom of a space where the robot device is located based on the first sensing data and the second sensing data;
identifying a plurality of sub spaces included in the space based on the bottom information;
obtaining driving level information, wherein the driving level information comprises driving levels associated with each of the plurality of sub spaces, and
controlling the driving of the robot device based on a driving level of a sub space corresponding to a location of the robot device, the sub space being among the plurality of sub spaces.

12. The control method of claim 11,
wherein the bottom information comprises:
information related to a flat area and a non-flat area in the space, and
the identifying the plurality of sub spaces comprises:
identifying the plurality of sub spaces by dividing the space into the flat area or the non-flat area based on the bottom information.

13. The control method of claim 12,
wherein the obtaining the driving level information comprises:
based on a bottom of a first sub space among the plurality of sub spaces corresponding to the flat area, identifying the driving level of the first sub space as a first driving level; and
based on a bottom of a second sub space among the plurality of sub spaces corresponding to the non-flat area, identifying the driving level of the second sub space as a second driving level, and
wherein a driving speed of the robot device at the second driving level is slower than the driving speed of the robot device at the first driving level.

14. The control method of claim 11,
wherein the identifying the plurality of sub spaces comprises:
based on a fluctuation in a first distance and a second distance, identifying an area wherein the robot device is located as a non-flat area, wherein the first distance is between the first LiDAR sensor and the bottom on which the robot device is located, and the second distance is between the second LiDAR sensor and the bottom.

15. The control method of claim 14,
wherein the identifying the area wherein the robot device is located as the non-flat area comprises:
identify the area wherein the robot device is located in a first time section as the non-flat area, based on the first sensing data and the second sensing data, if a first pattern of increase and decrease of the first distance to the bottom detected in the first direction does not correspond to a driving speed of the robot device, or a second pattern of increase and decrease of the second distance to the bottom detected in the second direction does not correspond to the driving speed of the robot device in the first time section.
